# EUROPEAN PATENT APPLICATION

(11) **EP 2 698 875 A1**
(43) Date of publication of application: **19.02.2014**
(21) Application number: 12771492.1
(22) Date of filing: 10.02.2012
(51) Int. Cl.: H01R 13/02, H01R 13/40, H01L 31/048

(54) **CONDUCTIVE BOARD**

(30) Priority: 14.04.2011 CN 201110107789
(71) Applicant: Yueqing Xindali Industries Co., Ltd., Zhejiang 325604 (CN); EME Ltd., 8123 Ebmatingen (CH)
(72) Inventor: LIU, Yuzhu, Zhejiang 325604 (CN); KRUESI, Peter, CH-8123 Ebmatingen (CH)
(74) Representative: Groth & Co. KB
(86) International application number: PCT/CN2012/000163
(87) International publication number: WO 2012/139412

(57) **Abstract**

A conductive board (21) comprises a coupling portion (210) and a fixing portion (211), wherein the coupling portion is arranged at one side of the conductive board and corresponds to one end of a cable; the fixing portion is provided with at least two through holes (2110) which are adapted to and located relative to projections (2412) formed on the bottom surface of the junction box (2); on another side of the conductive board that is far from the coupling portion, is provided a hanging portion (212) for connecting the conductive board by a conductor; and at a position on the fixing portion that is close to the hanging portion, is provided a conductivity testing region (2112) with an area not smaller than 10mm × 6mm. The conductive board has the characteristics of being reasonable in structure, convenient, practical and the like.

## Description

### Field of the Invention

The present invention relates to a conductive board, in particular to a conductive board adapted to a junction box which is particularly applicable to connecting device attached to a solar panel.

### Background of the Invention

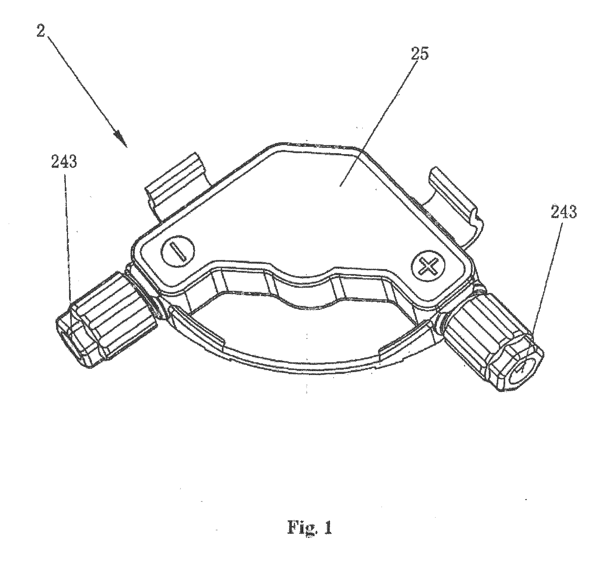

As is well known, a conductive board is an indispensible component in a junction box, which relies on functions of the conductive board therein to achieve, in low-voltage electric application, effective connection between various electric devices. Based on the customer's specific requirements on the junction box (the shape and the structure of the junction box are shown in Fig. 1), a conductive board with a novel design and a reasonable structure is further developed in the present invention, and the conductive board is special for use in the junction box specified by the customer as shown in Fig. 1, and special for use with connecting means attached to a solar panel.

### Summary of the Invention

The objective of the present invention is to overcome the defects of the prior art, and provide a conductive board which has a novel design and a reasonable structure and is adapted to a specific junction box.

To achieve the above objective, the present invention provides a conductive board, adapted for being arranged in a junction box, is provided with a coupling portion and a fixing portion, wherein the coupling portion is arranged at one side of the conductive board and corresponds to one end of a cable; the fixing portion is provided with at least two through holes which are adapted to projections provided on bottom surface of the junction box to form a fixation; a hanging portion for connecting the conductive board by a conductor is disposed on another side of the conductive board that is far from the coupling portion; and a conductivity testing region with an area not smaller than 10mm × 6mm is formed on the fixing portion and close to the hanging portion.

Through the above improvement on the prior art, the conductive board is adapted to the projections formed on the bottom surface of the junction box by the through holes to achieve a fixation, and is connected with the hanging portion by the conductor, and when a factory test is conducted, as the conductivity testing region with an area not smaller than 10mm × 6mm is provided at the position that is close to the hanging portion, the region with the size dimensions is particularly suitable for detection by an mechanical arm.

Preferably, the coupling portion is provided with a cable clamping hole and a cable core clamping hole which are axially disposed, and the cable clamping hole is formed ahead relative to the cable core clamping hole. As the cable clamping hole is formed ahead relative to the cable core clamping hole, when one end of the cable is to be clamped, a cable core projecting from the end of the cable can be clamped conveniently by the cable core clamping hole, and then an external insulating layer of the cable can be clamped by the cable clamping hole, thereby ensuring the stability of connection between the conductive board and the cable.

Further preferably, the conductor is a conductive rod with a diode, and the hanging portion is constructed to be bent upward at 90° relative to the fixing portion; and the hanging portion is provided with an arc-shaped transverse groove, and the conductive rod connecting the conductive board is adapted to the arc-shaped transverse groove and provides longitudinal position limitation on the conductive board. In further design of is the structure, as the diode is arranged on the conductive rod at the hanging portion, when delivery inspection is carried out, the diode will be lit up in case of good conduction, and it will not flicker in case of poor conduction, so that a worker or the mechanical arm can more visually discern the conduction state of the conductive board; still further, the cooperation between the conductive rod and the arc-shaped transverse groove of the hanging portion also provides, to some extent, further longitudinal position limitation, such that the conductive board is positioned more securely.

Further preferably, a through slot is formed at a lateral side of the conductive board, and a downward bent convex edge is formed at another lateral side corresponding to the through slot, with an arc transition formed between the convex edge and the upper end face of the conductive board. The reason why the through slot and the convex edge are respectively formed at the two corresponding lateral sides of the conductive board is that in specific situations, for example, in order to further retain the conductive board in position within the junction box, a stop block and a position limiting groove are provided at positions within the junction box corresponding to the through slot and the convex edge, respectively; in addition, due to the arc transition between the convex edge and the upper end face of the fixing portion of the conductive board, it achieves, to some extent, the effect of less probability of hurting the hand and affecting the product.

Still further preferably, at a position on the upper end face of the fixing portion of the conductive board that is close to the convex edge is provided a spot welding region with an area not smaller than 10mm × 6mm. The spot welding region is intended to be reserved for conveniently spot welding an external connecting attachment to the position of the spot welding region of the conductive board when the conductive board is mounted in the junction box, which is then connected to a solar panel.

### Detailed Description of the Drawings

Fig. 1 is a stereoscopic schematic view of a junction box structure of one embodiment of the present invention.
Fig. 2 is a stereoscopic schematic view of Fig. 1 with a closing plate removed.
Fig. 3 is a stereoscopic schematic view of a conductive board of one embodiment of the present invention.

### Detailed Description of the Embodiments

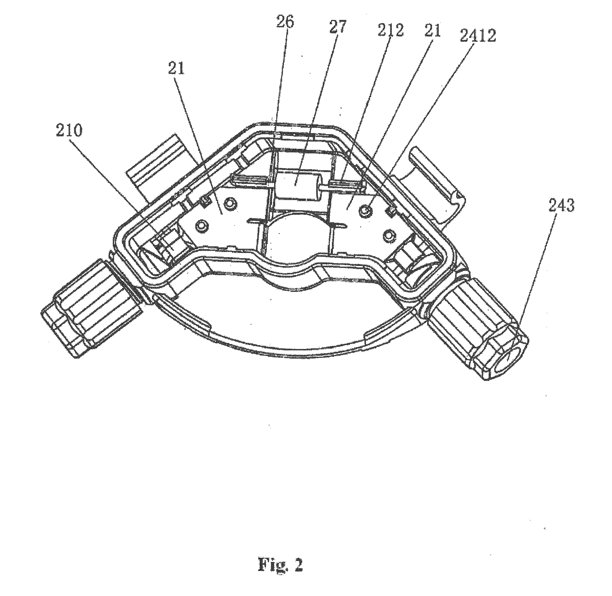

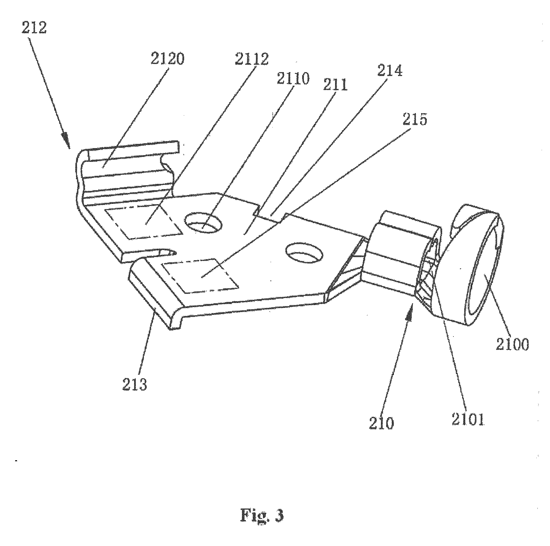

As shown in Figs. 1-3, a particular embodiment of the present invention relates to a conductive board, and the conductive board shown in Fig. 3 is special for use in a junction box 2 shown in Fig. 1. The internal structure of the junction box 2 and the placing position of the conductive board can be obviously seen from Fig. 2 with the closing plate 25 removed, and it can be seen in conjunction with Fig. 3 the conductive board 21 is provided with a coupling portion 210 and a fixing portion 211, wherein the coupling portion 210 is arranged on one side of the conductive board and corresponds to one end of a cable. In the embodiment, the coupling portion 210 is provided with a cable clamping hole 2100 and a cable core clamping hole 2101 which are axially disposed and have different inner diameters, and the cable clamping hole 2100 is formed ahead relative to the cable core clamping hole 2101. As the cable clamping hole 2100 is formed ahead of the cable core clamping hole 2101, when one end of the cable is to be clamped, a cable core projecting from the end of the cable can be clamped conveniently by the cable core clamping hole 2101, and then an external insulating layer of the cable can be clamped by the cable clamping hole 2100, thereby ensuring the stability of connection between the conductive board and the cable. It can also be seen in conjunction with Figs. 2 and 3 that the fixing portion 211 is provided with two through holes 2110 which are adapted to projections 2412 provided on bottom surface of the junction box 2 to form a fixation; a hanging portion 212 for connecting the conductive board by a conductive rod 26 with a diode 27 is disposed on another side of the conductive board that is far from the coupling portion 210; and a conductivity testing region 2112 with an area not smaller than 10mm × 6mm is formed on the fixing portion and close to the hanging portion, and the region with the size dimensions is particularly suitable for detection by an mechanical arm. Obviously the area of the conductivity testing region 2112 can be larger. The hanging portion 212, which is bent upward at 90°, is provided at a position on the conductive board 21 that is far from the coupling portion 210 and corresponds to the connecting rod 26, and the hanging portion 212 is provided with an arc-shaped transverse groove 2120, and the conductive rod 26 is adapted to the arc-shaped transverse groove 2120 and provides longitudinal position limitation on the conductive board 21. In further design of such a structure as the diode 27 is arranged on the conductive rod 26 at the hanging portion 212, when delivery inspection is carried out, the diode 27 will be lit up in case of good conduction, and it will not flicker in case of poor conduction, so that a worker or the mechanical arm can more visually discern the conduction state of the conductive board; still further, the cooperation between the conductive rod 26 and the arc-shaped transverse groove 2120 of the hanging portion 212 also provides, to some extent, further longitudinal position limitation, such that the conductive board is located more securely. It can also be seen obviously from Fig. 3 that a through slot 214 is formed at a lateral side of the conductive board, and a downward bent convex edge 213 is formed at another lateral side corresponding to the through slot 214, with an arc transition formed between the convex edge 213 and the upper end face of the fixing portion 211 of the conductive board. The reason why the through slot 214 and the convex edge 213 are respectively formed at the two corresponding lateral sides of the conductive board is that in specific situations, for example, in order to further retain the conductive board in position within the junction box 2, an adapted stop block and position limiting groove are provided at positions within the junction box 2 corresponding to the through slot 214 and the convex edge 213 respectively; in addition, due to the arc transition between the convex edge 213 and the upper end face of the fixing portion of the conductive board, it achieves, to some extent, the effect of less probability of hurting the hand and causing flaws on the product. In Fig. 3, at a position on the upper end face of the fixing portion 211 of the conductive board that is close to the convex edge 213, is provided a spot welding region 215 with an area not smaller than 10mm × 6mm, and the spot welding region 215 is intended to be reserved for conveniently spot welding an external connecting attachment to the position of the spot welding region 215 of the conductive board when the conductive board is mounted in the junction box, which is then connected to a solar panel.

Apparently, all obvious improvements fall into the protection scope of the present invention as long as they are derived from the spirit of the present invention.

## Claims

1. A conductive board, adapted for being arranged in a junction box, is provided with a coupling portion and a fixing portion, wherein the coupling portion is arranged at one side of the conductive board and corresponds to one end of a cable; the fixing portion is provided with at least two through holes which are adapted to projections provided on bottom surface of the junction box to form a fixation; a hanging portion for connecting the conductive board by a conductor is disposed on another side of the conductive board that is far from the coupling portion; and a conductivity testing region with an area not smaller than 10mm × 6mm is formed on the fixing portion and close to the hanging portion.

2. The conductive board of claim 1, wherein, the coupling portion is provided with a cable clamping hole and a cable core clamping hole which are axially disposed, and the cable clamping hole is arranged ahead relative to the cable core clamping hole.

3. The conductive board of claim 1 or 2, wherein, the conductor is a conductive rod with a diode, and the hanging portion is constructed to be bent upward at 90° relative to the fixing portion; and the hanging portion is provided with an arc-shaped transverse groove, and the conductive rod connecting the conductive board is adapted to the arc-shaped transverse groove and provides longitudinal position limitation on the conductive board.

4. The conductive board of claim 1 or 2, wherein, a through slot is formed at a lateral side of the conductive board, and a downward bent convex edge is formed at another lateral side corresponding to the through slot, with an arc transition formed between the convex edge and the upper end face of the conductive board.

5. The conductive board of claim 4, wherein, a spot welding region with an area not smaller than 10mm × 6mm is formed on the upper end face of the fixing portion of the conductive board and close to the convex edge.
